# EUROPEAN PATENT APPLICATION

(11) **EP 2 166 436 A1**
(43) Date of publication of application: **24.03.2010**
(21) Application number: 09169952.0
(22) Date of filing: 10.09.2009
(51) Int. Cl.: G06F 3/048, G06F 3/041, G06F 1/32

(54) **Proximity sensor based input system and method for operating the same**

(30) Priority: 12.09.2008 KR 20080090183
(71) Applicant: Samsung Electronics Co., Ltd., Suwon-si, Gyeonggi-do (KR)
(72) Inventor: Yang, Woong Seok, Gyeonggi-do (KR); Park, Hwi Won, Gyeonggi-do (KR); Park, Jin Woo, Gyeonggi-do (KR)
(74) Representative: Boakes, Jason Carrington

(57) **Abstract**

A proximity sensor based input system and a method for operating the system are disclosed. The input system receives sensed information from a proximity sensing part including a plurality of proximity sensors and distinguishes functions of direction keys and rotation keys based on the sensed information, thereby controlling a currently activated application program or contents.

## Description

### BACKGROUND OF THE INVENTION

### 1. Field of the Invention:

The present invention relates to portable terminals. More particularly, the present invention relates to a proximity sensor based system that generates a variety of input signals according to information sensed by a plurality of proximity sensors, installed to the external body of a portable terminal, and distinguishes among the input signals, and to a method for operating the system.

### 2. Description of the Related Art:

In recent years, portable terminals have become widely used due to their convenient portability. In particular, portable terminals have become so popular that a majority of people around the world are using them since they allow users to make a voice call while moving. In addition to their calling function, portable terminals now include a variety of additional functions. For example, portable terminals may include functions such as an MP3 player, a digital camera, and the like. They can also support mobile games, arcade games, etc.

Conventional portable terminals are configured to include an input unit having a limited number of keys. Since the number of input keys is limited, conventional portable terminals have difficulty arranging the keys in a manner that is convenient for each of a variety of application programs that may be activated. Conventional portable terminals also are disadvantageous in that, since a user must repeatedly press keys on the keypad or touch a certain area on the touch pad or touch screen to generate an input signal, a corresponding key or touch area becomes desensitized after a short period of time, and thus an input signal may not be generated.

Accordingly, there is a need for a proximity sensor based system that can more easily generate a variety of input signals according to a user's operation, and a method for operating the system.

### SUMMARY OF THE INVENTION

An aspect of the present invention is to address the above-mentioned problems and/or disadvantages and to provide at least the advantages described below. Accordingly, an aspect of the present invention is to provide a proximity sensor based system that can relatively easily generate a variety of input signals according to a user's operation, and a method for operating the system.

In accordance with an exemplary embodiment of the present invention, a proximity sensor based input system of a portable terminal is provided. The input system includes a proximity sensing part including a plurality of proximity sensors, and a controller for collecting sensed information from the proximity sensors, and for generating at least one input signal corresponding to functions of right and left direction keys, up and down direction keys, diagonal direction keys, and a shuttle key, according to the order of collected sensed information.

In accordance with another exemplary embodiment of the present invention, a method for operating a proximity sensor based input system in a portable terminal is provided. The method includes activating a proximity sensing part including a plurality of proximity sensors, collecting sensed information from the plurality of proximity sensors, and generating an input signal according to at least one of the functions of right and left direction keys, up and down direction keys, diagonal direction keys, and shuttle key, based on the received order of the collected sensed information.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description taken in conjunction with the accompanying drawings, in which:

FIG. 1 is a schematic block diagram illustrating a portable terminal according to an exemplary embodiment of the present invention;

FIG. 2 is a detailed view illustrating a controller according to an exemplary embodiment of the present invention;

FIGs. 3A and 3B are schematic views illustrating locations of proximity sensors installed on an external body of a portable terminal according to an exemplary embodiment of the present invention;

FIG. 4A is a schematic view illustrating an external body of a portable terminal, in which four proximity sensors are located according to an exemplary embodiment of the present invention;

FIG. 4B shows a view that describes connection among four proximity sensors and a controller according to an exemplary embodiment of the present invention;

FIG. 5 is a flowchart describing a method for operating a proximity sensor based input system according to an exemplary embodiment of the present invention; and

FIG. 6 is a flowchart describing a method for operating a proximity sensor based input system according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Prior to explaining exemplary embodiments of the present invention, terminologies will be defined for the description below. The terms or words used in the description and the claims should not be limited by a general or lexical meaning, but instead should be analyzed as a meaning and a concept through which the inventor defines and describes the present invention. Therefore, one skilled in the art will understand that the exemplary embodiments disclosed in the description and configurations illustrated in the drawings are merely for purpose of illustration, and that there may be various modifications, alterations, and equivalents thereof to replace the examples at the time of filing this application.

In an exemplary embodiment of the proximity sensor based input system according to the present invention, at least two proximity sensors are placed on a portable terminal. In an exemplary implementation, a proximity sensor may be placed at an upper left, an upper right, a lower left and a lower right of the portable terminal, with respect to the center of the front of the portable terminal. When the input system receives information sensed by one proximity sensor located at the left or right and then receives information sensed by another proximity sensor located at right or left within a time period, it generates an input signal according to functions of the right and left direction keys, based on the sensed information. When the input system receives information sensed by one proximity sensor located at an upper or lower portion and then receives information sensed by another proximity sensor located at a lower or upper portion within a time period, it generates an input signal corresponding to functions of up and down direction keys, based on the sensed information. When the input system receives information sensed by a proximity sensor located at a particular position with respect to the front of the portable terminal, and then sequentially receives pieces of information sensed by proximity sensors located at a plurality of positions within a time period, it generates an input signal corresponding to a shuttle function based on the pieces of sensed information. When the input system receives pieces of information sensed by proximity sensors located at the upper left or right portion and at the lower left or right portion with respect to the front of the portable terminal, and then receives information sensed by proximity sensors located at the lower right or left and the upper right or left within a time period, it generates an input signal corresponding to a diagonal direction key function based on the pieces of sensed information.

In an exemplary method for operating a proximity sensor based input system, content is displayed on a display unit or a plurality of contents are displayed in multi-images on the display unit by activating application programs. More particularly, in order to designate a particular one of the plurality of contents displayed on the screen by a highlighted box, movement of the highlighted box can be controlled by one of the up and down direction keys, right and left direction keys, diagonal direction keys, and shuttle function key. In order to display a particular content, from among the plurality of contents, on the whole screen of the display unit, the plurality of contents are shown slidably, rotated, dragged or zoomed in/out on the display unit by one of the up and down direction keys, right and left direction keys, diagonal direction keys, and shuttle function key. In order to reproduce contents, for example, a source audio file, one of the functions of selecting a next audio file, fast forwarding or rewinding, and adjusting volume is controlled by one of the functions of the up and down direction keys, right and left direction keys, diagonal direction keys, and a shuttle key. In order to make a video call, the functions of controlling volume and zooming in/out of a video image are controlled by one of the functions of the up and down direction keys, right and left direction keys, diagonal direction keys, and a shuttle key.

In the following description, an exemplary proximity sensor based input system and the method for operating the system are explained in more detail with reference to the accompanying drawings.

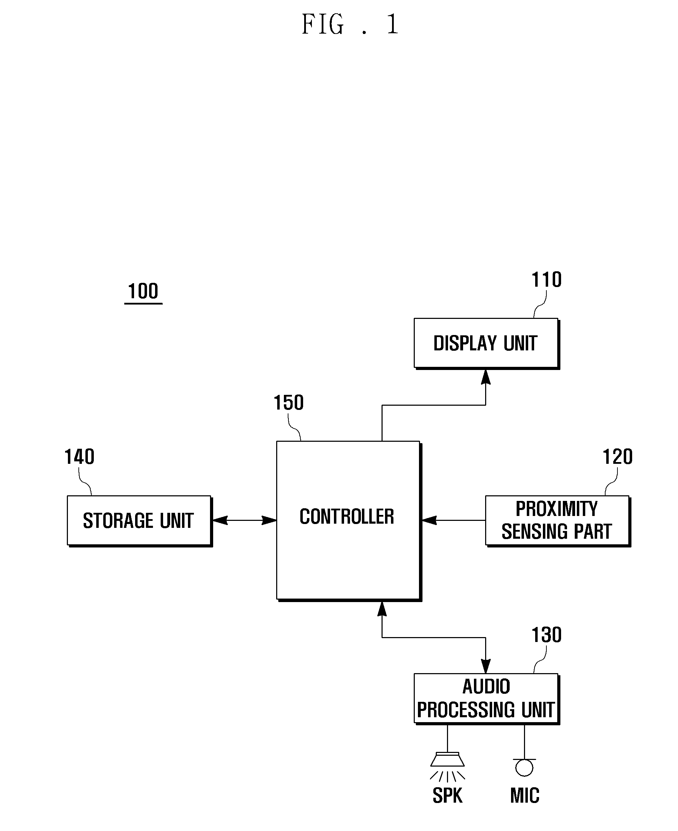

FIG. 1 is a schematic block diagram illustrating a portable terminal according to an exemplary embodiment of the present invention.

Referring to FIG. 1, the portable terminal 100 includes a display unit 110, a proximity sensing part 120, an audio processing unit 130, a storage unit 140 and a controller 150.

The portable terminal 100 activates the proximity sensing part 120 according to a mode set by a user, and distinguishes among signals input by the user based on information sensed by the proximity sensing part 120. After that, the portable terminal 100 executes a particular application program to perform functions based on the distinguished input signals. In the following description, elements included in the portable terminal 100 are explained in more detail.

The display unit 110 displays screens corresponding to functions of the portable terminal 100. For example, it displays a booted screen, a standby screen, a menu screen, a program activating screen, etc. The display unit 110 may be implemented with a Liquid Crystal Display (LCD). In that case, the display unit 110 further includes an LCD controller, a memory for storing data, and an LCD device. In particular, if the LCD is implemented to include a proximity sensor, the display unit 110 may also serve as an input unit. Furthermore, if the display unit 110 is implemented with a touch panel or a touch screen, it can also serve as an input unit. The input unit may be implemented with a separate independent keypad.

In an exemplary embodiment of the present invention, the display unit 110 can also display a screen according to a file reproduction function in a portable terminal 100. If a user intends to activate a file reproduction function, the portable terminal 100 displays a menu screen including an item or an icon corresponding to the file reproduction function. After that, when the user activates the item and icon, the portable terminal 100 displays a screen including a file list. When the user selects a particular file list, the portable terminal 100 displays a screen showing the reproduction of the selected file list. Afterwards, the display unit 110 displays a changed reproduction screen according to the sensed information of the proximity sensing part 120. For example, if the file list is a list of photograph files, the display unit 110 can display a plurality of multi-photographs in one screen, where the plurality of multi-photographs are generated as a plurality of photographs reduced to a certain size, respectively. When a particular photograph is selected from among the multi-photographs, the display unit 110 can display it on the whole screen. While the display unit 110 displays the multi-photographs or a selected photograph in the whole screen, the portable terminal 100 can perform photograph viewing functions according to the sensed information, such as a photograph slide show function, a photograph rotation function, a photograph magnifying or reducing function, etc., thereby displaying a corresponding photograph on the display unit 110.

The proximity sensing part 120 is configured to include a plurality of proximity sensors and collects information sensed thereby. The proximity sensor may be implemented with various types of sensors, for example, a magnetic type, a magnetic saturation type, a high frequency oscillated type, a differential coil type, a capacitance type, a laser based transmission/reception type, etc. The magnetic proximity sensor is configured to include a conductive component and a magnetic component, where a reed switch is located at the center of the conductive component and a permanent magnet is placed in the magnetic component. The magnetic saturation type proximity sensor is configured in such a way that a coil winds around a core so as to have an inductance. The magnetic saturation type proximity sensor is operated in such a way that, as the inductance impedance is decreased, the core permeability is reduced and a voltage is correspondingly dropped. The high frequency oscillated type proximity sensor refers to a proximity sensor that detects changes in the oscillation amplitude or oscillation frequency. The differential coil type proximity sensor refers to a proximity sensor that is configured in such a way that differential coils are symmetrically placed in excite coils included in an oscillation circuit and thus amplifies an inductive voltage to perform a sensing operation. The capacitance type proximity sensor refers to a proximity sensor that can detect changes in the capacitance as charges are moved. The laser based transmission/reception type proximity sensor refers to a proximity sensor that is operated in such a way that a light emitting part emits light, detects whether a light receiving part receives the light or detects a time period that has elapsed until the light is received, determines whether an object is moved in front of the proximity sensor, and generates sensed information. In the following description, an exemplary embodiment of the present invention is explained with respect to the capacitance type proximity sensor. A plurality of proximity sensing parts 120 may be placed in one side of the display unit 110 or a certain area of the external body of the portable terminal 100, and may serve as an input unit of the portable terminal 100. For example, the proximity sensing parts 120 are placed at the upper left and right sides of the portable terminal 100, respectively. When the user's hand or other objects are moved to an area in the vicinity of the proximity sensing parts 120, the proximity sensing parts 120 generate sensed information and output them to the controller 150. If the changed amount of charge according to the distance between the moved object and the proximity sensing parts 120 is equal to or greater than a threshold value, the proximity sensing parts 120 ascertain that there is an input signal and thus output the sensed information to the controller 150. The sensed information of the proximity sensing parts 120 is generated by a plurality of sensors. According to the form of the sensed information, the time interval of generation between the sensed information, and the direction of generation of the sensed information, the sensed information can serve as a variety of function keys. In the following description, operation of the proximity sensing parts 120 is explained in more detail with reference to the accompanying drawings.

While a variety of files stored in the storage unit 140 are played back, the audio processing unit 130 processes audio signals included in respective files and outputs a corresponding audio signal. To this end, the audio processing unit 130 includes a speaker (SPK) for reproducing audio signals. The audio processing unit 130 also includes a microphone (MIC) for receiving a user's voice sound or other audio signals when the portable terminal 100 performs an audio collecting function to support mobile communication, etc.

The storage unit 140 can store an application program necessary for operation functions according to an exemplary embodiment of the present invention, an application for operating the proximity sensing parts 120, and an application program for reproducing a variety of stored files. The storage unit 140 can also serve as a buffer that temporarily stores sensed information output from the proximity sensing part 120 to match the sensed information to an input signal corresponding to a particular function key. The storage unit 140 is configured to include a program area and a data area.

The program area can store an Operating System (OS) for booting the portable terminal 100 and an application program for reproducing a variety of files, such as an MP3 application program for reproducing source sound files. The program area can also store an image output application program for reproducing photographs, etc., an application program for reproducing moving images, and an application program for operating the proximity sensing part 120. If the portable terminal 100 has a video call function, i.e., if the portable terminal 100 further includes a camera and an RF communication unit, the program area may further store application programs for operating the camera, for collecting audio sounds, and for operating the RF communication unit.

The data area stores data generated when the portable terminal 100 is used. Examples of the data include a variety of source sound files, photograph files, moving image files, etc. The data area includes key mapping information for operating the proximity sensing part 120 as an input unit. The key mapping information refers to information that maps sensed information, output from the proximity sensing part 120, to a particular function key. When the controller 150 receives the sensed information from the proximity sensing part 120, it determines a function of the received sensed information, based on the key mapping information, and then applies the determined function to a currently executed application program. For example, the controller 150 determines the key mapping information in such a way that, when the controller sequentially receives sensed information from a plurality of proximity sensors, it defines the sensed information as a function corresponding to a particular direction key or a shuttle function, etc., according to the received order of the sensed information.

When the portable terminal 100 has a video call function, it may further include a camera and an RF communication unit. The camera collects images according to the control of the controller 150 and displays preview images on the display unit 110. The RF communication unit establishes a communication channel with other portable terminals under the control of the controller 150, and transmits images collected by the camera to the other portable terminals. The RF communication unit can also receive images from other portable terminals, so that they can be displayed on the display unit 110.

The controller 150 performs a controlling operation to supply power to the portable terminal 100. The controller 150 activates elements in the portable terminal 100 and controls the flow of signals among the elements. In an exemplary implementation, the controller 150 can control an application program, currently executed in the portable terminal 100, based on the sensed information from the proximity sensing part 120. A user can designate an application program to perform an input control function that uses the proximity sensing part 120 in the portable terminal 100. To this end, the controller 150 displays a menu screen that allows the user to select the application program that uses the proximity sensing part 120. For example, if a user of the portable terminal 100 uses a function of the proximity sensing part 120 in a file reproduction function and a video call function, the controller 150 activates the proximity sensing part 120 only when the file reproduction function or video call function is activated, and then controls a corresponding function based on the sensed information from the proximity sensing part 120. If the controller 150 ascertains that the file reproduction function or video call function is not activated, it does not supply electric power to the proximity sensing part 120 so as not to generate sensed information.

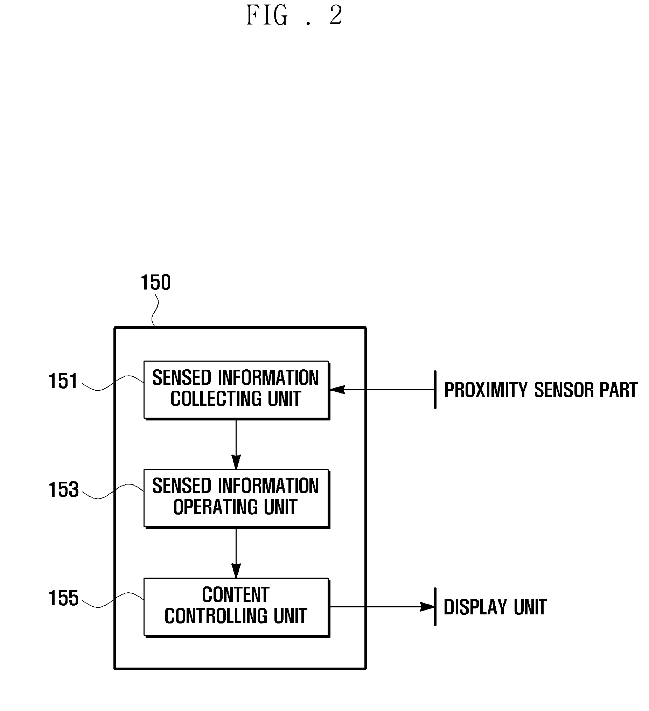

FIG. 2 is a detailed view illustrating a controller according to an exemplary embodiment of the present invention.

Referring to FIG. 2, the controller 150 is configured to include a sensed information collecting unit 151, a sensed information operating unit 153, and a content controlling unit 155.

The sensed information collecting unit 151 determines whether the proximity sensing part 120 is activated by using information regarding a user's setting state. That is, as described above, the activation of the sensed information collecting unit 151 is determined based on user's setting information that controls input by using the proximity sensing part 120 when a particular application is activated. To this end, the sensed information collecting unit 151 determines which type of application program is currently executed. For example, if the controller 150 ascertains that a file reproduction function or video call function is activated, it activates the proximity sensing part 120 by supplying electric power thereto. In an exemplary embodiment of the present invention, although the sensed information collecting unit 151 is explained based on a file reproducing function and a video call function, it should be understood that the present invention is not limited to this embodiment. For example, the sensed information collecting unit 151 can also be implemented to be applied to other function, such as a camera function, a navigation function, etc.

The sensed information operating unit 153 receives sensed information from the sensed information collecting unit 151 and ascertains that the received sensed information corresponds to an input signal. To this end, the sensed information operating unit 153 determines key mapping information stored in the storage unit 140, identifies the key mapping information matched with sensed information, generates a corresponding input signal, and outputs it to the content controller unit 155. For example, if the sensed information operating unit 153 receives first sensed information from the first proximity sensor, located at the upper left with respect to the front of the portable terminal, and then receives second sensed information from the second proximity sensor, located at the upper right, within a time period, it determines key mapping information and then may generate an input signal corresponding to a right direction key.

The content controlling unit 155 applies an input signal, operated by the sensed information operating unit 153, to contents. For example, if a photograph searching function is activated with respect to a currently reproduced file and an input signal corresponding to the right direction key is input to the sensed information operating unit 153, the content controlling unit 155 may execute a photograph search, for example, currently being performed with a slide show, in such a way that the photograph search is performed via slide show function where photographs are slid from left to right. When a photograph search is performed on a multi-photograph screen on which a plurality of photographs, each of which has a certain size, are shown, the content controlling unit 155 can also move a highlighted box for highlighting a particular photograph to the right.

As described above, a proximity sensor based input system, according to an exemplary embodiment of the present invention, receives sensed information from a plurality of proximity sensors installed on one side of a portable terminal, analyzes the sensed information according to the preset key mapping information, generates input signals corresponding to keys, and then controls a currently performed function.

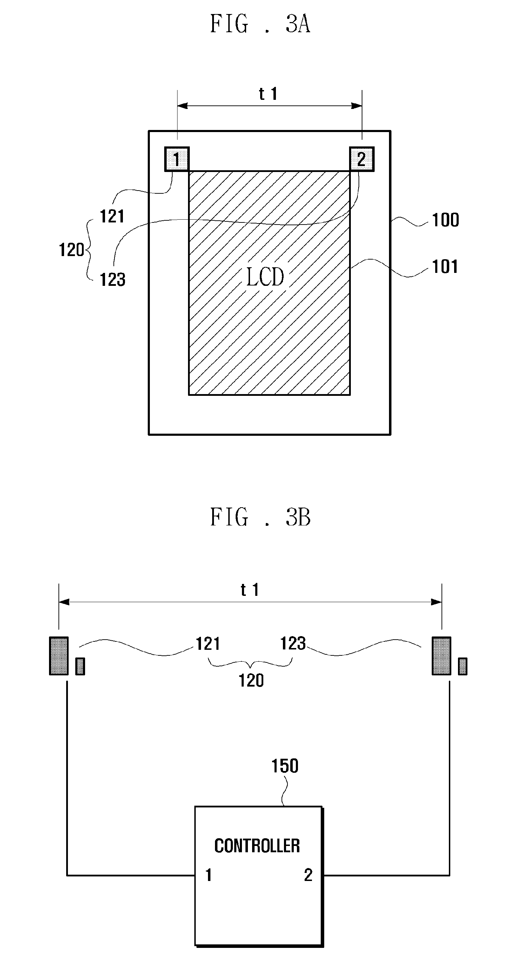

FIG. 3A and FIG. 3B are schematic views illustrating locations of proximity sensors installed on an external body of a portable terminal according to an exemplary embodiment of the present invention. FIG. 3A illustrates locations of two proximity sensors located on the portable terminal and FIG. 3B is a view to describe an operation of the two proximity sensors with respect to the controller 150.

Referring to FIGs. 3A and 3B, the proximity sensing part 120 includes a first proximity sensor 121, located at an upper left of the portable terminal 100, and a second proximity sensor 123 located at upper right. The controller 150 may further allocate its ports to the first and second proximity sensors 121 and 123, and receive sensed information from the sensors 121 and 123 via the allocated ports, respectively. The controller 150 can distinguish between the sensed information from first and second proximity sensors 121 and 123.

If a portable terminal user activates a particular application program having output that is displayed on LCD display 101, the proximity sensing part 120 may be operated corresponding thereto. When the controller 150 receives an input signal corresponding to the activation of a particular application program from the user, it supplies electric power to the proximity sensing part 120 to collect sensed information. For example, if the portable terminal user moves his/her hand or other object close to a sensing area of the first proximity sensor 121, the first proximity sensor 121 detects that the object is near thereto. After that, the first proximity sensor 121 determines whether the object is moved within a preset distance and then identifies whether the movement of the object is to generate a substantial input signal. To this end, the first proximity sensor 121 may be implemented with a variety of sensors, for example, a capacitance type sensor or a laser based transmission/reception type sensor. If the first proximity sensor 121 is implemented by a capacitance type sensor, it determines changes in the capacitance according to the approach distance of an object, and, when a change in the preset capacitance occurs, ascertains that there is an approach of an object in such a way as to generate an input signal. If the first proximity sensor 121 is implemented by a laser based transmission/reception type sensor, it determines the time interval from when a signal is transmitted from a light emitting unit to when the signal is received by a light receiving unit and then determines the approach distance of an object. For example, if the time interval is within a certain time period t1, an input signal is generated, so that sensed information is output to the controller 150. The certain time period t1 refers to a preset time period that may be set according to a setting of a portable terminal manufacturer or a portable terminal user.

If the user moves his/her hand or an object toward the first proximity sensor 121 so that it can generate sensed information and then moves toward the second proximity sensor 123 so that it can generate sensed information within a certain time period, the controller 150 collects first sensed information from the first proximity sensor 121 and then second sensed information from the second proximity sensor 123 within a certain time period. The controller 150 determines whether the certain time period is within a threshold time period and then determines whether the user moves an object from the first proximity sensor 121 to the second proximity sensor 123. If the controller 150 receives first sensed information via a particular port, for example, a first port, and then second sensed information via a particular port, for example, a second port within a certain time period, it ascertains that the currently sensed information is an input signal corresponding to a function of a direction key. In that case, the controller 150 determines a function of the currently executed application program. That is, the controller 150 determines for which function a current application program is executed, for example, a multi-photograph search function, a photograph search function through the entire screen, a book reading function through a file view function, etc. After that, the controller 150 controls contents to meet currently executed functions, respectively, based on the determined input signal and then outputs them on the display unit 110. For example, if a multi-photograph search function is executed on the display unit 110, the controller 150 may perform a control operation to move a highlight from left to right. In addition, if a photograph search function through the entire screen is executed on the display unit 110, the controller 150 may perform a slide show function that allows a user to search through photographs from left to right. If the controller 150 receives the second sensed information from the second proximity sensor 123 and then the first sensed information from the first proximity sensor 121, it determines that the currently sensed information is input signals corresponding to a function of left direction key and accordingly controls contents that are currently executed.

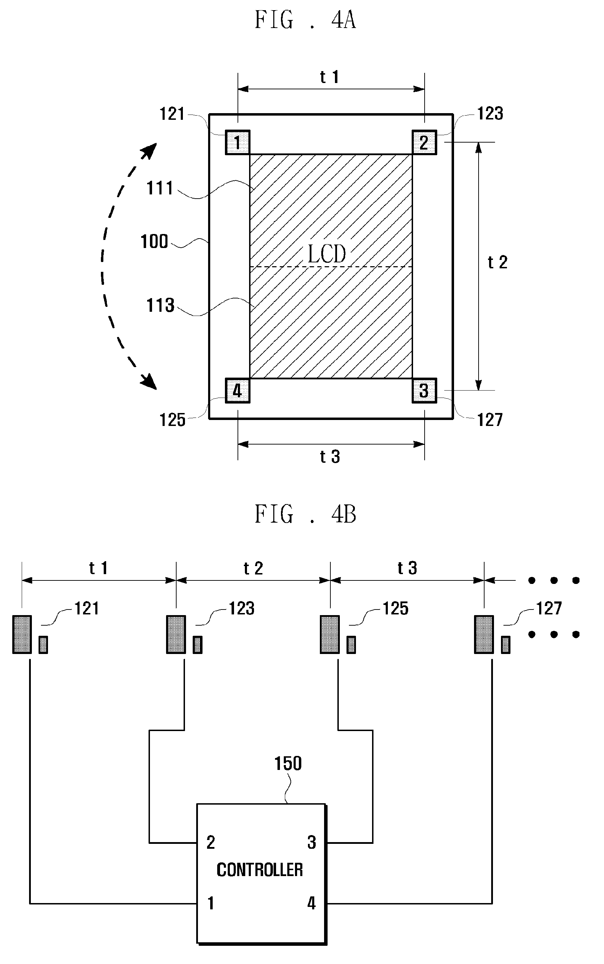

FIG. 4A is a schematic view illustrating an external body of a portable terminal, according to an exemplary embodiment of the present invention, and FIG. 4B shows a view that describes connection among proximity sensors and the controller 150, according to an exemplary embodiment of the present invention.

Referring to FIGs. 4A and 4B, the proximity sensing part 120 includes a first proximity sensor 121, located at the upper left of the portable terminal 100, a second proximity sensor 123, located at the upper right, a third proximity sensor 125, located at the lower right, and a fourth proximity sensor127 located at the lower left. The controller 150 may allocate its ports to the first to fourth proximity sensors 121, 123, 125, 127, and receive sensed information from the sensors 121~127 via the allocated ports, respectively. The controller 150 can distinguish among the sensed information from the first to fourth proximity sensors 121 to 127.

If a portable terminal user activates a particular application program, the proximity sensing part 120 may be operated corresponding thereto. To this end, the controller 150 determines whether a particular application program having set input control of the proximity sensing part 120 is activated. If the particular application program is activated, the controller 150 supplies electric power to the proximity sensing part 120 to collect sensed information. For example, if the portable terminal user makes his/her hand or other object approach a sensing area of the first proximity sensor 121, the first proximity sensor 121 detects that the object is near thereto. After that, the first proximity sensor 121 determines whether the object is moved within a preset distance and then identifies whether the movement of the object is to generate a substantial input signal. To this end, the first proximity sensor 121 may be implemented with a variety of sensors as described above. Similar to the operation of the first proximity sensor 121, the second, third and fourth proximity sensors 123, 125, and 127 can detect whether an object approaches within a preset distance, generate sensed information according to the detection, and then output the information to the controller 150.

If the controller 150 receives first sensed information via a particular port, for example, the first port, and then second sensed information via a particular port, for example, the second port within a certain time period, it ascertains that the currently sensed information is an input signal corresponding to a function of a direction key. In that case, the controller 150 determines a function of the currently executed application program. That is, the controller 150 determines for which function a current application program is executed, for example, a multi-photograph search function, a photograph search function through the entire screen, a book reading function through a file view function, etc. Input signals for functions of direction keys can be differentiated according to the sequence of the first, second, third, and fourth sensed information generated by the first, second, third, and fourth proximity sensors 121, 123, 125, and 127, respectively.

For example, if the controller 150 receives the fourth sensed information and then third sensed information within a certain time period t3, it recognizes that the received sensed information corresponds to a function of the right direction key. Similarly, if the controller 150 receives the third sensed information and then the fourth sensed information within a certain time period, it recognizes that the received sensed information corresponds to a function of the left direction key. If the controller 150 receives the fourth sensed information and then the first sensed information within a certain time period t1, it recognizes that the received sensed information corresponds to functions of the up and down direction keys. Similarly, if the controller 150 receives the third sensed information and then the second sensed information within a time period t2, it recognizes that the received sensed information corresponds to functions of the up and down direction keys. In addition, if the controller 150 receives simultaneously both the third and fourth sensed information and then simultaneously both the first and second sensed information within a certain time period, it recognizes that the received sensed information corresponds to functions of the up and down direction keys. If the controller 150 receives both the third and fourth sensed information and then the first or second sensed information within a certain time period, it recognizes that the received sensed information corresponds to functions of the up and down direction keys. In addition, if the controller 150 receives sensed information in the diagonal direction, i.e., the first sensed information and then the third sensed information or the fourth sensed information and then the second sensed information, it recognizes that the received sensed information corresponds to a function of the diagonal direction key.

Therefore, the controller 150 determines the received sensed information, generates an input signal corresponding to one of the functions of right and left direction keys, up and down direction keys, diagonal direction keys, and shuttle, and controls a currently executed application program and contents based on the generated input signal. Contents may be controlled by the function of the diagonal direction keys as follows. For example, if an image, as a content, whose size is greater than that of the screen of the display unit 110 is displayed, the large image can be dragged on the screen of the display unit 110 according to the functions of the diagonal direction keys. If the controller 150 ascertains that the sensed information corresponds to the functions of the diagonal direction keys, it can move a highlighted box on the multi-image in the diagonal direction. In an exemplary embodiment of the present invention, the time periods t1, t2, and t3 are implemented to be the same time interval. It should be understood that they can be different time periods according to the setting of a portable terminal manufacturer or a user.

The display unit 110 may show two separated screens. The controller 150 can perform input control, based on sensed information from the proximity sensing part 120, on the two separated screens, respectively. For example, as illustrated in FIG. 4A, if the display unit 110 shows two separated screens on each of which a content corresponding to a file search function is executed, the first display screen 111 may be altered according to sensed information from the first and second proximity sensors 121 and 123. Similarly, the second display screen 113 may also be altered according to sensed information from the third and fourth proximity sensors 125 and 127. If a user intends to operate proximity sensors, i.e., the first and second proximity sensors 121 and 123, using his/her hand, his/her palm may approach the third and fourth proximity sensors 125 and 127. Therefore, in an environment where display unit 110 shows the first and second display screens 111 and 113 that are separated, after simultaneously receiving the third and fourth sensed information from the third and fourth proximity sensors 125 and 127, respectively, if the controller 150 receives the first sensed information and then the second sensed information within a certain time period, it recognizes that the received sensed information corresponds to a function of the right direction key.

If the controller 150 successively receives more than three pieces of sensed information, it performs a shuttle function. For example, if the controller 150 receives the fourth sensed information from the fourth proximity sensor 127, then the first sensed information within a certain time period, then the second sensed information within a certain time period, then the third sensed information within a certain time period, and then the fourth sensed information within a certain time period again, it ascertains that the user sequentially rotates and approaches the respective proximity sensors and thus recognizes that the currently received sensed information corresponds to a function of a shuttle key that rotates contents on the display unit. The shuttle key is used to control the shuttle speed, i.e., the rotation speed of contents, according to the rate of the received sensed information from the proximity sensors. That is, the controller 150 can control the rotation speed of contents on the display unit 110, according to the received rate of the sensed information. The controller 150 can also control the rotation direction of contents on the display unit 110, according to the received order of the sensed information.

As described above, the proximity sensor based input system, according to an exemplary embodiment of the present invention, receives sensed information from a plurality of proximity sensors, installed on the portable terminal, and controls a plurality of input control for the contents on the display unit 110, based on the order of received sensed information and the time interval between received sensed information. The input system can also modify the functions of direction keys to meet a variety of application programs and apply them thereto. For example, when a source sound is reproduced in the portable terminal, the functions of the up and down direction keys may correspond to a volume adjusting function and the functions of right and left direction keys may correspond to a source sound file selecting function, and a fast forwarding or a rewinding function. In addition, a function of a direction key may serve as different functions according to the currently executed application program. That is, one function of a direction key may serve to indicate the direction of a slide show or the movement of the highlighted box in a photograph search function. In a video call, a direction key or shuttle function key may serve as a key for adjusting volume, a key for enlarging/reducing a screen, and a key for activating a zoom in/out function.

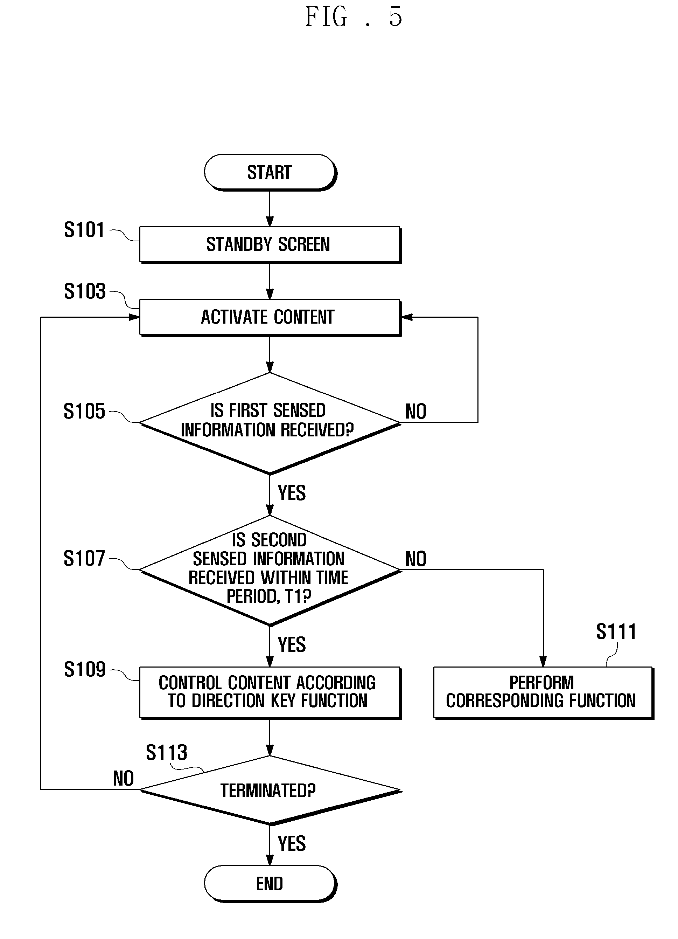

FIG. 5 is a flowchart describing a method for operating a proximity sensor based input system including two proximity sensors, according to an exemplary embodiment of the present invention.

Referring to FIG. 5, after being turned on and booted, the portable terminal displays a standby screen on a display unit in step S101.

When a user activates a particular function of the portable terminal, the controller activates a content corresponding to the activated function in step S103. For example, if a photograph search function is activated, contents stored in the storage unit, i.e., photograph files, are displayed on a particular screen. For example, a plurality of photographs are displayed in a multi-image on the screen, where the multi-image shows a plurality of images in the same size. A photograph can also be displayed on the whole screen on the display unit. If a source sound file reproducing function is activated, the controller reproduces a particular source sound. In addition, the controller can also display screens according to a variety of functions of the portable terminal, such as a video call function, a camera function, etc.

If a proximity sensing part is not activated at step S103, the controller supplies electric power to the proximity sensing part to activate it. If the proximity sensing part continues to be activated since the portable terminal has been booted, it may generate sensed information that the user does not desire. Therefore, the controller can set to operate the proximity sensing part according to the activation of a particular content or an application program. In an exemplary implementation, the controller may activate the proximity sensing part according to the activation of content.

After that, the controller determines whether first sensed information is received from the first proximity sensor in step S105. If it is determined that particular sensed information is received at step S105, the controller returns to and proceeds with step S103 where a content remains in an activation state.

On the contrary, if it is determined that first sensed information is received at step S105, the controller determines whether second sensed information is received within a time period t1 in step S107. The time period t1 refers to a period of time according to a setting of the portable terminal or a user's setting. For example, the time period t1 may be a few seconds to a few milliseconds. The time periods, such as time period t1, may differ depending on the application or function that is activated. If it is determined that second sensed information is not received within in a time period t1 at step S107, the controller performs a corresponding function according to the first sensed information in step S111. For example, if the controller receives only the first sensed information, it recognizes that the first sensed information is a value corresponding to a 'confirmation' key that confirms a currently activated content. In particular, if the content is a source sound, the controller recognizes that the first sensed information is a value corresponding to a 'reproduction' or 'pause' key.

In contrast, if it is determined that second sensed information is received within in a time period t1 at step S107, the controller performs content control corresponding to a function of a direction key in step S109. That is, if a currently activated content is an image, such as a photograph, the controller may perform a slide show function. If a currently activated content is a multi-image function, the controller may perform a control operation to move a highlighted box designating a particular content. If a currently activated content is a source sound, the controller may search other source sound files or perform a fast forwarding or rewinding function, during the process of reproducing the source sound.

After that, the controller determines whether content activation is terminated in step S113. If it is determined that content activation is not terminated at S113, the controller returns to and proceeds with step S103, and then repeats the process described above. On the contrary, if it is determined that content activation is terminated at step S113, the procedure is terminated.

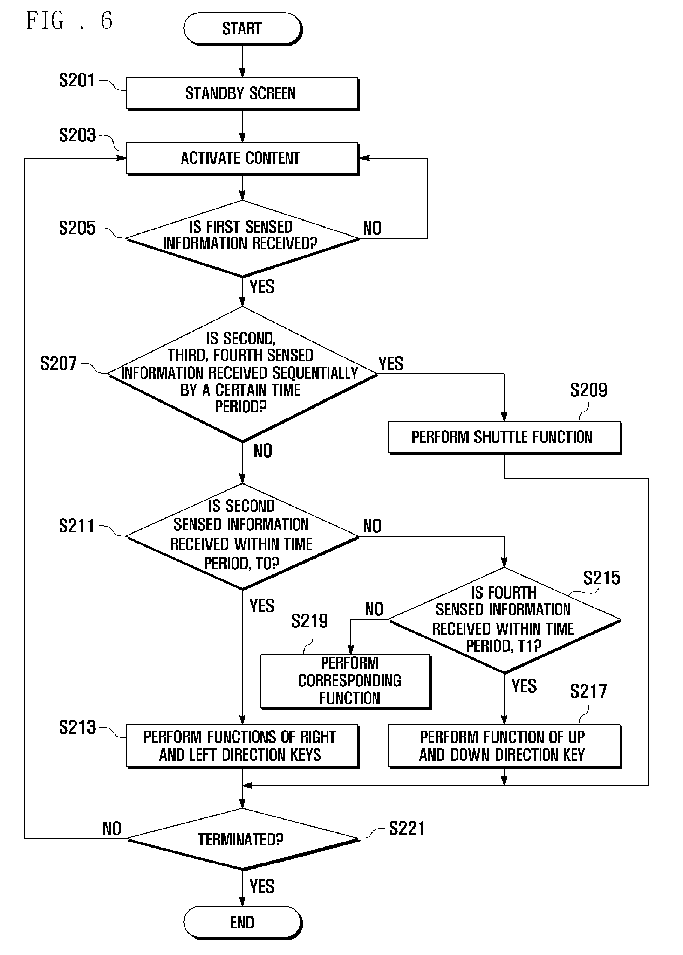

FIG. 6 is a flowchart describing a method for operating a proximity sensor based input system having four proximity sensors, according to an exemplary embodiment of the present invention.

Referring to FIG. 6, after being turned on and booted, the portable terminal displays a standby screen on the display unit in step S201.

The controller activates an application program or content according to a user's input in the portable terminal in step S203. To this end, the portable terminal may further include an input unit of a key pad type. In order to activate content, the controller supplies electric power to the proximity sensing part, and thus the proximity sensing part is activated. Since a portable terminal is likely to be stored in a user's pocket, bag, etc., it is preferable that the proximity sensing part is activated in the portable terminal when a particular user function, such as a video call function, a file reproducing function, a file search function, etc., is activated. In that case, the portable terminal can save electric power and prevent the occurrence of an input error.

After that, the controller determines whether to receive first sensed information from the first proximity sensor of the proximity sensing part (in step S205. If it is determined that first sensed information is not received at step S205, the controller returns to and proceeds with step S203 where it performs a control operation to retain the content activating function.

On the contrary, if it is determined that first sensed information is received at step S205, the controller determines whether second, third, and fourth sensed information is sequentially received in step S207. If it is determined that second to fourth sensed information is sequentially received at step S207, the controller performs a shuttle function for an application program and contents, which are currently activated in step S209.

On the contrary, if it is determined that second to fourth sensed information is not sequentially received at step S207, the controller determines whether to receive second sensed information within a time period t0 in step S211. If it is determined that second sensed information is received within a time period t0 at step S211, the controller generates an input signal for performing functions of right and left direction keys based on the currently received sensed information in step S213, so that it can control an application program and contents bases on the generated input signal.

On the contrary, if it is determined that second sensed information is not received within a time period t0 at step S211, the controller determines whether fourth sensed information is received within a time period t1 in step S215. If it is determined that fourth sensed information is received within a time period t1 at step S215, the controller generates an input signal for performing functions of up and down direction keys based on the currently received sensed information in step S217, so that it can control an application program and contents bases on the generated input signal.

On the contrary, if it is determined that fourth sensed information is not received within a time period t1 at step S215, the controller performs a function corresponding to currently received sensed information, such as a content confirmation, a source sound reproduction, a pause of reproducing a source sound, etc. in step S219. After performing steps S209, S213, and S217, the controller determines whether activation of contents or an application program is terminated in step S221. If the controller ascertains that activation of contents and an application program is retained at step S221, it returns to and proceeds with step S203, and then repeats the process described above. On the contrary, if it is determined that activation of contents and an application program is terminated at step S221, the procedure is terminated.

In an exemplary embodiment of the present invention, although the controller generates input signals according to functions of right and left direction keys, up and down direction keys, and a shuttle key, based on first sensed information, and controls application programs or contents based on the generated input signals, it should be understood that the present invention is not limited to the illustrated examples. For example, after receiving sensed information from a particular proximity sensor, the controller can generate input signals for functions of right and left direction keys, up and down direction keys, and a shuttle key, according to which sensed information the controller receives from other proximity sensors, within a certain time period, with respect to the sensed information received from the particular proximity sensor. In particular, in order to perform a shuttle function, the controller determines the rotation direction based on the generated input signal.

In an exemplary embodiment of the present invention, although the input system and the method for operating the system are explained based on two proximity sensors and four proximity sensors, respectively, it should be understood that the present invention is not so limited. For example, the input system and the method can also be implemented with three, five, and six proximity sensors, respectively. That is, the present invention is not limited by the number of proximity sensors. It will be appreciated that the present invention can also be implemented by the use of a plurality of proximity sensors, so as to activate functions corresponding to function-keys and accordingly perform functions for contents, such as a video call function, a file reproducing function, etc.

As described above, an exemplary proximity sensor based input system and method can generate input signals for functions of right and left direction keys, up and down direction keys, and a shuttle key to control an application or contents, which are currently activated, based on the received order of sensed information from a plurality of proximity sensors. In particular, the input system and the method can generate an input signal for a function of diagonal direction keys, based on the order of the sensed information received by the controller.

As described above, an exemplary proximity sensor based system and method for operating the system can generate a variety of input signals according to information sensed by a plurality of proximity sensors, and thus allow a variety of applications to be conveniently operated.

Certain aspects of the present invention can also be embodied as computer readable code on a computer readable recording medium. A computer readable recording medium is any data storage device that can store data which can be thereafter read by a computer system. Examples of the computer readable recording medium include Read-Only Memory (ROM), Random-Access Memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of invention as defined by the appended claims and their equivalents.

## Claims

1. A method for operating a proximity sensor based input system in a portable terminal, the method comprising:
activating a proximity sensing part including a plurality of proximity sensors;
collecting sensed information from the plurality of proximity sensors; and
generating an input signal according to at least one of the functions of right and left direction keys, up and down direction keys, diagonal direction keys, and shuttle key, based on the received order of the collected sensed information.

2. The method of claim 1, wherein the activating of the proximity sensing part comprises:
activating at least one of an application program and contents stored in a storage unit.

3. The method of claim 1, wherein:
the collecting of sensed information comprises:
receiving sensed information from a first proximity sensor located at one of a left side and a right side with respect to the front of the portable terminal; and
receiving sensed information from a second proximity sensor located at one of the right side and the left side within a preset time period, and
the generating of the input signal comprises:
generating an input signal corresponding to functions of the right and left direction keys, based on the sensed information.

4. The method of claim 3, further comprising:
controlling content displayed on a display unit according to the input signal,
wherein the controlling of the content comprises at least one of the following:
moving, if a plurality of contents are displayed in a multi-image, a highlighted box designating a particular content to the left or right, according to the input signal;
sliding, if a particular one of the plurality of contents is displayed in the whole screen, the plurality of contents to one of the left and right on the display unit, according to the input signal;
performing, if the content comprises a source sound and the source sound is reproduced, one of the functions of selecting a next source sound file, fast forwarding, rewinding, and adjusting volume, according to the input signal; and
adjusting, if the content comprises a video call, volume according to the input signal.

5. The method of claim 1, wherein:
the collecting of the sensed information comprises:
receiving sensed information from a first proximity sensor located at one of an upper side and a lower side with respect to the front of the portable terminal; and
receiving sensed information from a second proximity sensor located at one of the lower side and the upper side within a preset time period, and
the generating of the input signal comprises:
generating an input signal corresponding to functions of the upper and lower direction keys, based on the sensed information.

6. The method of claim 5, further comprising:
controlling content displayed on the display unit according to the input signal,
wherein the controlling of the content comprises at least one of the following:
moving, if a plurality of contents are displayed in a multi-image, a highlighted box designating a particular content up or down, according to the input signal;
sliding, if a particular one of the plurality of contents is displayed in the whole screen, the plurality of contents up or down on the display unit, according to the input signal;
performing, if the content comprises a source sound and the source sound is reproduced, one of the functions of selecting a next source sound file, fast forwarding, rewinding, and adjusting volume, according to the input signal; and
adjusting, if the content comprises a video call, volume according to the input signal.

7. The method of claim 1, wherein:
the collecting of the sensed information comprises:
receiving sensed information from a first proximity sensor located at a first location with respect to the front of the portable terminal; and
receiving sensed information from proximity sensors located at a plurality of locations, sequentially, within a preset time period, and
the generating of the input signal comprises:
generating an input signal corresponding to a function of a shuttle key, based on the sensed information.

8. The method of claim 7, wherein the generating of the input signal comprises:
detecting the rotation direction of the sensed information sequentially received from the first location and the plurality of locations; and
determining the rotation direction of an input signal according to the function of a shuttle key, based on the detected rotation direction.

9. The method of claim 7, further comprising:
controlling content displayed on the display unit according to the input signal,
wherein the controlling of the content comprises at least one of the following:
moving, if a plurality of contents are displayed in a multi-image, a highlighted box designating a particular content in the rotation direction according to the input signal;
performing, if a particular one of the plurality of contents is displayed in the whole screen, one of rotating the plurality of contents in the rotation direction according to the input signal on the display unit and zooming in/out the particular content according to the rotation direction of the input signal;
performing, if the content comprises a source sound and the source sound is reproduced, one of the functions of selecting a next source sound file, fast forwarding, rewinding, and adjusting volume, according to the rotation direction of the input signal; and
performing, if the content comprises a video call, one of adjusting volume and zooming in/out the video image, according to the rotation direction of the input signal.

10. The method of claim 1, wherein:
the collecting of the sensed information comprises:
receiving sensed information from proximity sensors located at one of an upper left side and an upper right side and one of a lower left side and a lower right side with respect to the front of the portable terminal; and
receiving sensed information from proximity sensors located at one of the lower right side and the lower left side and one of the upper right side and the upper left side within a preset time period, and
the generating of the input signal comprises:
generating an input signal corresponding to functions of diagonal direction keys, based on the sensed information.

11. The method of claim 10, further comprising:
controlling content displayed on the display unit according to the input signal,
wherein the controlling of the content comprises one of the following:
moving, if a plurality of contents are displayed in a multi-image, a highlighted box designating a particular content in the diagonal direction, according to the input signal; and
dragging, if a particular one of the plurality of contents is displayed in the whole screen, the particular content in a diagonal direction on the display unit, according to the input signal.

12. A proximity sensor based input system of a portable terminal, the input system comprising:
a proximity sensing part including a plurality of proximity sensors; and
a controller for collecting sensed information from the proximity sensors, and for generating at least one input signal corresponding to functions of right and left direction keys, up and down direction keys, diagonal direction keys, and a shuttle key, according to the order of collected sensed information.

13. The input system of claim 12, further comprising:
a storage unit for storing at least one of an application program and contents;
wherein the controller activates the proximity sensing part when at least one of the application program and the contents are activated.

14. The input system of claim 12, wherein:
the plurality of proximity sensors are respectively located at at least two of the upper left, upper right, lower left, and lower right, with respect to the front of the portable terminal; and
the controller performs at least one of the following:
receiving sensed information from a proximity sensor located at one of a left side and a right side with respect to the front of the portable terminal, and generating, if sensed information is received from proximity sensors located at one of the right side and the left side within a preset time period, an input signal corresponding to functions of the right and left direction keys, respectively;
receiving sensed information from a proximity sensor located at one of an upper side and a lower side with respect to the front of the portable terminal, and generating, if sensed information is received from a proximity sensor located at one of the lower side and the upper side within a preset time period, an input signal corresponding to functions of the up and down direction keys, respectively;
receiving sensed information from a proximity sensor located at a particular location with respect to the front of the portable terminal, and generating, if sensed information is received from each of proximity sensors located at a plurality of locations, sequentially, within a preset time period, an input signal corresponding to a function of a shuttle key, based on the received sensed information; and
receiving sensed information from each of proximity sensors located at one of the upper left side and the upper right side and one of the lower left side and the lower right side with respect to the front of the portable terminal, and generating, if sensed information is received from each of proximity sensors located at one of the lower right side and the lower left side and one of the upper right side and the upper left side within a preset time period, an input signal corresponding to functions of diagonal direction keys, based on the sensed information.

15. The input system of claim 14, further comprising:
a display unit for displaying at least one of an application program and content on the screen when they are respectively activated,
wherein the controller performs at least one of the following:
displaying a plurality of contents in a multi-image on the display unit, and moving a highlighted box designating a particular content, according to one of the functions of the right and left direction keys, up and down direction keys, diagonal direction keys, and shuttle key;
displaying a particular one of the plurality of contents on the whole screen, and performing a control operation to at least one of slide, rotate, drag and zoom in/out the plurality of contents on the display unit, according to one of the functions of the right and left direction keys, up and down direction keys, diagonal direction keys, and shuttle key;
reproducing a source sound file as content, and performing a control operation to select one of the functions of selecting a next source sound file, fast forwarding, rewinding, and adjusting volume, according to one of the functions of the right and left direction keys, up and down direction keys, diagonal direction keys, and shuttle key; and
allowing for a video call as content, and performing a control operation to at least one of adjust volume and zooms in/out video images, according to one of the functions of the right and left direction keys, up and down direction keys, diagonal direction keys, and shuttle key.
